# EUROPEAN PATENT APPLICATION

(11) **EP 4 187 756 A1**
(43) Date of publication of application: **31.05.2023**
(21) Application number: 21856045.6
(22) Date of filing: 16.06.2021
(51) Int. Cl.: H02J 50/40, H02J 50/12, H02J 50/90, H01F 38/14, H02J 50/00, H04B 5/00

(54) **WIRELESS POWER TRANSMISSION DEVICE INCLUDING MULTIPLE RESONATORS, AND OPERATION METHOD THEREOF**

(30) Priority: 13.08.2020 KR 20200101469
(71) Applicant: Samsung Electronics Co., Ltd., Suwon-si, Gyeonggi-do 16677 (KR)
(72) Inventor: YEO, Sungku, Suwon-si, Gyeonggi-do 16677 (KR); GU, Beomwoo, Suwon-si, Gyeonggi-do 16677 (KR); PARK, Jaeseok, Suwon-si, Gyeonggi-do 16677 (KR); PARK, Jaehyun, Suwon-si, Gyeonggi-do 16677 (KR); BYUN, Kangho, Suwon-si, Gyeonggi-do 16677 (KR); RYU, Youngho, Suwon-si, Gyeonggi-do 16677 (KR); LEE, Jeongman, Suwon-si, Gyeonggi-do 16677 (KR); LEE, Chongmin, Suwon-si, Gyeonggi-do 16677 (KR)
(74) Representative: Gulde & Partner
(86) International application number: PCT/KR2021/007574
(87) International publication number: WO 2022/035038

(57) **Abstract**

According to various embodiments, a wireless power transmission device may be provided. The wireless power transmission device may comprise: a power provider configured to provide direct current power; a power converter configured to output multiple alternating current powers through a first output path and a second output path, respectively, by using the direct current power received from the power provider; a first resonator and a second resonator connected to the first output path and the second output path, respectively; a power sensor configured to measure current and/or voltage applied to each of the first resonator and the second resonator; and a controller. The controller may be configured to: perform a detection operation of an external electronic device for each of the first resonator and the second resonator on the basis of a measurement result from the power sensor; select a resonator for performing charging of the external electronic device, on the basis of the detection operation for each of the first resonator and the second resonator; and control the power converter to apply power for charging to the selected resonator, wherein a first diameter of a first coil of the first resonator is smaller than a second diameter of a second coil of the second resonator, and the first coil is disposed on the inner side of the second coil.

## Description

### [Technical Field]

Various embodiments of the disclosure relate to a wireless power transmission device and a method of operating the same.

### [Background Art]

For many people living in modern times, portable digital communication devices have become a necessity. Consumers want to receive a variety of high-quality services that they want anytime, anywhere. Furthermore, the recent Internet of thing (IoT) has interconnected various sensors, home appliances, and communication devices in our lives into a network. To smoothly operate these various sensors, a wireless power transmission system is required. An electronic device that receives power wirelessly may be implemented as a large electronic device such as a robot or a vacuum cleaner as well as a small Bluetooth earphone, a wearable device, and a smartphone.

Wireless power transmission schemes include a magnetic induction scheme and a magnetic resonance scheme. In the magnetic induction scheme, which is defined in, for example, the wireless power consortium (WPC) standard (or Qi standard), wireless charging may be performed using a frequency of 100kHz to 205kHz. A wireless power transmission device and an electronic device operating in the magnetic induction scheme may be configured to perform wireless charging within a relatively short range. In the magnetic resonance scheme, which is defined in, for example, the air fuel alliance (AFA) standard (or the alliance for wireless power (A4WP) standard), wireless charging may be performed using a frequency of 6.78MHz. A wireless power transmission device and an electronic device operating according to the magnetic resonance scheme may be configured to perform wireless charging in a relatively long range, compared to the magnetic induction scheme.

### [Detailed Description of the Invention]

### [Technical Problem]

A magnetic induction-type wireless power transmission device in the shape of a pad may have a limited charging area in which an electronic device may be disposed. For example, wireless charging may be possible only for an electronic device placed on one surface of the pad. However, the electronic device disposed within the limited charging area may wirelessly receive a relatively large amount of power. Although a magnetic resonance-type wireless power transmission device may perform wireless charging even for an electronic device located at a relatively long distance (e.g., 30cm), the amount of power received by the electronic device may be relatively small. The wireless power transmission device is capable of performing wireless charging for an electronic device disposed to substantially contact the wireless power transmission device, and a wireless power transmission device for performing wireless charging for an electronic device disposed relatively far from the wireless power transmission device is yet to be specified.

A wireless power transmission device according to various embodiments may include a resonator for charging in a relatively short range and a resonator for charging in a relatively long range. A wireless power transmission device and a method of operating the same may perform a detection operation for a plurality of resonators and perform wireless charging using a resonator selected according to a result of the detection operation.

### [Technical Solution]

According to an embodiment, a wireless power transmission device may include a power supply configured to supply direct current (DC) power, a power converter configured to output a plurality of alternating current (AC) powers through a first output path and a second output path, respectively, using the DC power received from the power supply, a first resonator and a second resonator connected to the first output path and the second output path, respectively, a power sensor configured to measure a current and/or a voltage applied to each of the first resonator and the second resonator, and a controller. The controller may be configured to perform an operation of detecting an external electronic device for each of the first resonator and the second resonator, based on a measurement result from the power sensor, select a resonator for charging the external electronic device, based on the detection operation for each of the first resonator and the second resonator, and control the power converter to apply power for charging to the selected resonator. A first diameter of a first coil in the first resonator may be smaller than a second diameter of a second coil in the second resonator, and the first coil may be disposed inside the second coil.

According to an embodiment, a wireless power transmission device may include a power supply configured to supply DC power, a power converter configured to output a plurality of AC powers through a first output path and a second output path, respectively, using the DC power received from the power supply, a first resonator and a second resonator connected to the first output path and the second output path, respectively, a power sensor configured to measure a current and/or a voltage applied to each of the first resonator and the second resonator, at least one switch configured to selectively connect at least one of the first resonator or the second resonator to the power sensor, and a controller. The controller may be configured to perform an operation of detecting an external electronic device for each of the first resonator and the second resonator, based on a measurement result from the power sensor, select a resonator for charging the external electronic device, based on the detection operation for each of the first resonator and the second resonator, and control the at least one switch and the power converter to apply power for charging to the selected resonator. A first diameter of a first coil in the first resonator may be smaller than a second diameter of a second coil in the second resonator, and the first coil may be disposed inside the second coil.

### [Advantageous Effects]

According to various embodiments of the disclosure, a wireless power transmission device may be provided, which includes a resonator for charging in a relatively short range and a resonator for charging in a relatively long range. A wireless power transmission device and a method of operating the same may be provided, which perform a detection operation for a plurality of resonators and perform wireless charging using a resonator selected according to a result of the detection operation.

### [Brief Description of Drawings]

FIG. 1a illustrates a wireless power transmission and reception system according to an embodiment.
FIG. 1b illustrates a plurality of coils included in a wireless power transmission device according to an embodiment.
FIG. 1c illustrates a plurality of coils included in a wireless power transmission device according to an embodiment.
FIG. 1d illustrates a plurality of coils included in a wireless power transmission device according to an embodiment.
FIG. 2a illustrates a wireless power transmission device and an electronic device according to an embodiment.
FIG. 2b illustrates a wireless power transmission device and an electronic device according to an embodiment.
FIG. 3 is a flowchart illustrating a method of operating a wireless power transmission device according to an embodiment.
FIG. 4a illustrates a wireless power transmission device according to an embodiment.
FIG. 4b illustrates a matching circuit according to an embodiment.
FIGS. 5a and 5b illustrate a wireless power transmission device according to an embodiment.
FIG. 6a is a flowchart illustrating a method of operating a wireless power transmission device according to an embodiment.
FIG. 6b is a flowchart illustrating a method of operating a wireless power transmission device according to an embodiment.
FIG. 7 is a flowchart illustrating a method of operating a wireless power transmission device according to an embodiment.
FIG. 8 is a diagram referred to for describing power applied to each resonator according to an embodiment.
FIG. 9 is a flowchart illustrating a method of operating a wireless power transmission device according to an embodiment.
FIG. 10 is a diagram referred to for describing power applied to each resonator according to an embodiment.
FIG. 11 is a flowchart illustrating a method of operating a wireless power transmission device according to an embodiment.
FIG. 12 is a diagram referred to for describing power applied to each resonator according to an embodiment.
FIG. 13 illustrates a method of operating a wireless power transmission device according to an embodiment.
FIGS. 14a, 14b, 14c and 14d illustrate wireless power transmission devices and electronic devices according to various embodiments.
FIG. 15 illustrates a method of operating a wireless power transmission device according to an embodiment.
FIG. 16 illustrates a wireless power transmission device and an electronic device according to an embodiment.

### [Mode for Carrying out the Invention]

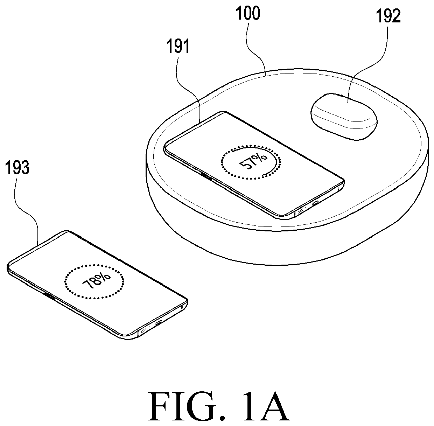

FIG. 1a illustrates a wireless power transmission and reception system according to an embodiment.

The wireless power transmission and reception system according to an embodiment may include a wireless power transmission device 100. The wireless power transmission and reception system may include at least one electronic device 191, 192, and 193 that wirelessly receives power from the wireless power transmission device 100. The at least one electronic device 191, 192, and 193 may be referred to as a wireless power receiver in that it is capable of receiving power wirelessly.

As illustrated in FIG. 1a, the wireless power transmission device 100 may include a housing, and a first electronic device 191 and a second electronic device 192 may be disposed on the housing of the wireless power transmission device 100 to perform wireless charging. The housing of the wireless power transmission device 100 may include a top surface on which the first electronic device 191 and the second electronic device 192 may be disposed. The top surface is substantially flat so that the first electronic device 191 and the second electronic device 192 may be disposed, merely by way of example. The shape of the surface on which the first electronic device 191 and the second electronic device 192 are disposed is not limited, and may be substantially concave or convex. For convenience of description, the top surface of the wireless power transmission device 100 may be referred to as a first charging area. The first charging area may mean, but not limited to, an area in contact with the housing of the wireless power transmission device 100.

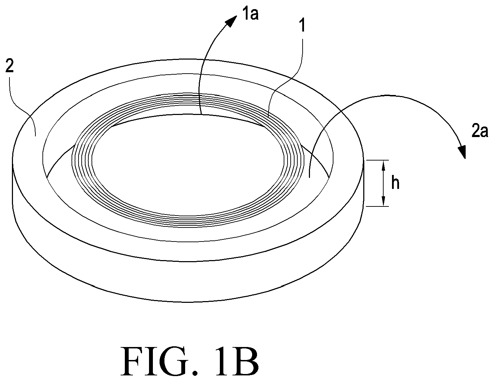

As illustrated in FIG. 1a, the wireless power transmission device 100 may perform wireless charging for a third electronic device 193 located around the wireless power transmission device 100. An area in which charging may be performed without contact with the housing of the wireless power transmission device 100 may be referred to as a second charging area, for convenience of description. The first charging area and the second charging area may be distinguished from each other, for example, by whether they are in contact with the housing, which is not the only criterion. For example, the first charging area and the second charging area may be distinguished from each other by their distances from any one point of the wireless power transmission device 100 or by their positional relationships with coils to be described later with reference to FIG. 1b. There is no limit in the classification criteria of the first and second charging areas.

For example, the wireless power transmission device 100 may wirelessly transmit power according to a resonance scheme. In the case of the resonance scheme, the wireless power transmission device 100 may include, for example, a power source, a direct current (DC)-alternating current (AC) conversion circuit, an amplifier circuit, an impedance matching circuit, at least one capacitor, at least one coil, an out-band communication circuit (e.g., Bluetooth low energy (BLE) communication circuit), and so on. The at least one capacitor and the at least one coil may form a resonant circuit. The wireless power transmission device 100 may be implemented in a manner defined in, for example, the air fuel alliance (AFA) standard (or the alliance for wireless power (A4WP) standard).

For example, the wireless power transmission device 100 may wirelessly transmit power according to an induction scheme. When the wireless power transmission device 100 operates based on the induction scheme, the wireless power transmission device 100 may include, for example, a power source, a DC-AC conversion circuit, an amplifier circuit, an impedance matching circuit, at least one capacitor, at least one coil, a communication modulation/demodulation circuit, and so on. The at least one capacitor together with the at least one coil may form a resonant circuit. The wireless power transmission device 100 may be implemented in a manner defined in the wireless power consortium (WPC) standard (or Qi standard).

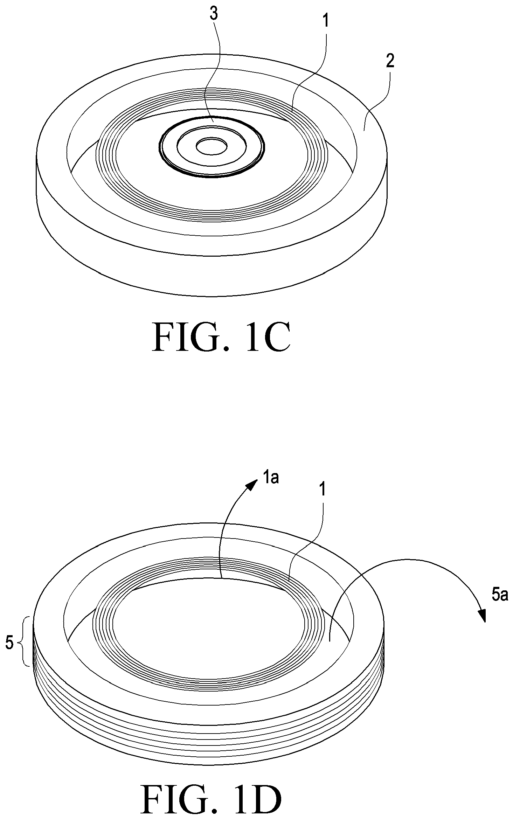

In an embodiment, the wireless power transmission device 100 may be configured to perform wireless charging based on either the resonance scheme or the induction scheme. Alternatively, the wireless power transmission device 100 may be configured to support both the resonance scheme and the induction scheme, which will be described with reference to FIG. 1c.

The wireless power transmission device 100 may include at least one coil capable of generating an induced magnetic field, when a current (e.g., AC current) flows according to the resonance scheme and/or the induction scheme. The process of generating an induced magnetic field through a coil in the wireless power transmission device 100 may be referred to as wireless power transmission of the wireless power transmission device 100. In addition, each of the electronic devices 191, 192, and 193 may include a coil in which an induced electromotive force is generated by a magnetic field with a variable magnitude over time, formed around the coil. A process of outputting an AC current from the coils or applying an AC voltage to the coils along with generation of induced electromotive forces in the coils of the electronic devices 191, 192, and 193 may be referred to as wireless power reception of the electronic devices 191, 192, and 193.

The wireless power transmission device 100 according to various embodiments of the disclosure may communicate with the electronic devices 191, 192, and 193. For example, the wireless power transmission device 100 may communicate with the electronic devices 191, 192, and 193 in an out-band manner based on the resonance scheme. The wireless power transmission device 100 or the electronic devices 191, 192, and 193 may transmit and receive data using a communication circuit (e.g., a BLE communication module) provided separately from a coil or patch antenna. The wireless power transmission device 100 may transmit media data, and depending on implementation, each of a plurality of different communication circuits (e.g., a BLE communication module, a Wi-fi module, and a Wi-gig module) may transmit and receive media data and a wireless power control signal. For example, the wireless power transmission device 100 may communicate with the electronic devices 191, 192, and 193 in an in-band manner based on the induction scheme. The wireless power transmission device 100 or the electronic devices 191, 192, and 193 may change the load (or impedance) of data to be transmitted, for example, according to on/off keying modulation. The wireless power transmission device 100 or the electronic device 191, 192, 193 may determine data transmitted from the other party by measuring a load variation (or impedance variation) based on a variation in the magnitude of a current, a voltage, or power of a coil.

Referring to FIG. 1a, the electronic devices 191, 192, and 193 may wirelessly receive power from the wireless power transmission device 100. The electronic devices 191, 192, and 193 may process (e.g., rectify and convert (or regulate)) power from the included coils and transmit the processed power to loads (e.g., batteries or chargers for charging the batteries) of the electronic devices 191, 192, and 193.

While a plurality of electronic devices 191 and 192 are disposed in the first charging area and one electronic device 193 is disposed in the second charging area in FIG. 1a, this is exemplary. The wireless power transmission device 100 according to the disclosure may also perform simultaneous charging for a plurality of electronic devices disposed in the second charging area.

FIG. 1b illustrates a plurality of coils included in a wireless power transmission device according to an embodiment.

Referring to FIG. 1b, the wireless power transmission device 100 may include a first coil 1 and a second coil 2. In an example, the diameter of the first coil 1 may be smaller than that of the second coil 2. For example, the first coil 1 may be a planar spiral coil, and the second coil 2 may be a loop coil. The first coil 1 may be disposed inside the second coil 2. The first coil 1 may form, for example, a magnetic field 1a for charging the first electronic device 191 and the second electronic device 192 disposed in the first charging area in FIG. 1a. The second coil 2 may form, for example, a magnetic field 2a for charging the third electronic device 193 disposed in the second charging area in FIG. 1a. The first coil 1 may have a shape for charging the first electronic device 191 and the second electronic device 192 disposed in the housing of the wireless power transmission device 100. For example, the first coil 1 may have a diameter corresponding to, but not limited to, the size of the top surface of the housing. For example, the first coil 1 may be implemented to have a size corresponding to that of reception coils included in the electronic devices 191 and 192, or a size suggested (or limited) by a standard. The second coil 2 may be disposed to form the magnetic field 2a in an area around the wireless power transmission device 100, and thus outside the first coil 1 as illustrated in FIG. 1b. However, the position of the second coil 2 is not limited. The diameter of the second coil 2 may be greater than that of the first coil 1 so that the second coil 2 is disposed outside the first coil 1.

In an example, the Q-factor of the first coil 1 may be lower than that of the second coil 2. A Q-factor may be a value obtained by dividing the product of an angular frequency ω of power applied to a coil and the inductance L of the coil by the resistance R of the coil. For example, to charge a relatively close electronic device (e.g., the first electronic device 191 and the second electronic device 192), the first coil 1 may be relatively tightly coupled with the electronic device to be charged, and thus designed to have a relatively low Q-factor. For example, to charge a relatively remote electronic device (e.g., the third electronic device 3), the second coil 2 may be relatively loosely coupled with the electronic device to be charged, and thus designed to have a relatively high Q-factor. In the embodiment of FIG. 1b, the first coil 1 may have a planar spiral shape, which is exemplary. The second coil 2 may be shaped into, for example, a loop having a height of h, which is exemplary. Because of the height of h, the internal resistance R of the second coil 2 may be relatively low and thus have a relatively high Q-factor. In an embodiment, both the first coil 1 and the second coil 2 may be designed based on the resonance scheme. In another example, both the first coil 1 and the second coil 2 may be designed based on the resonance scheme. In another example, the first coil 1 may be designed based on the induction scheme, and the second coil 2 may be designed based on the resonance scheme.

FIG. 1c illustrates a plurality of coils included in a wireless power transmission device according to an embodiment.

Referring to FIG. 1c, the wireless power transmission device 100 may include the first coil 1, the second coil 2, and a third coil 3. In the example of FIG. 1c, the first coil 1 and the second coil 2 may be designed based on the resonance scheme, and the third coil 3 may be designed based on the induction scheme. The inductive scheme and the resonance scheme may differ in terms of protocols. Accordingly, when the first coil 1 and the second coil 2 are designed based on the resonance scheme, the wireless power transmission device 100 may not be able to charge an electronic device supporting only the induction scheme. The wireless power transmission device 100 according to an embodiment may include the third coil 3 based on the induction scheme and hardware for processing in the induction scheme. Accordingly, an electronic device supporting only the induction scheme may also be wireless charged.

FIG. 1d illustrates a plurality of coils included in a wireless power transmission device according to an embodiment.

Referring to FIG. 1d, the wireless power transmission device 100 may include the first coil 1 and a plurality of third coils 5. In an example, the diameter of the first coil 1 may be smaller than those of the plurality of third coils 5. The first coil 1 may be disposed inside the plurality of third coils 5. The first coil 1 may form, for example, the magnetic field 1a for charging the first electronic device 191 and the second electronic device 192 disposed in the first charging area in FIG. 1a. The plurality of third coils 5 may form, for example, a magnetic field 5a for charging the third electronic device 193 disposed in the second charging area in FIG. 1a. The plurality of third coils 5 may be disposed to form the magnetic field 2a in an area around the wireless power transmission device 100, and thus disposed outside of the first coil 1 as illustrated in FIG. 1d. However, the position of the third coils 5 is not limited. The diameters of the plurality of third coils 5 may be greater than that of the first coil 1 so that the third coils 5 are disposed outside the first coil 1.

The plurality of third coils 5 may not be electrically connected to each other. When a current is applied to at least one of the plurality of third coils 5, a magnetic field may also be formed in the other coils by a magnetic field formed by the at least one current-applied coil. In another embodiment, a current may be applied to all of the plurality of third coils 5. Alternatively, the plurality of third coils 5 may be connected to each other, and in this case, a current applied to any one coil may flow through all of the third coils 5 connected to each other. In an example, the Q-factor of the first coil 1 may be lower than the Q-factor of at least one of the plurality of third coils 5.

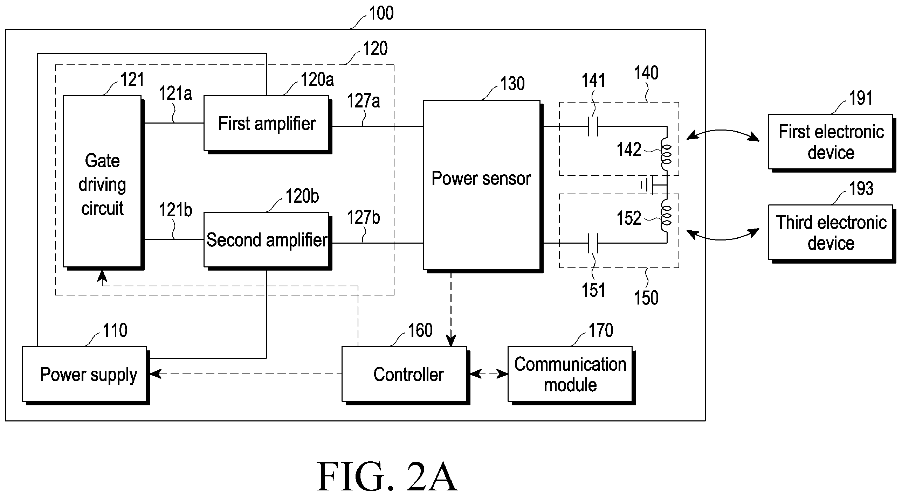

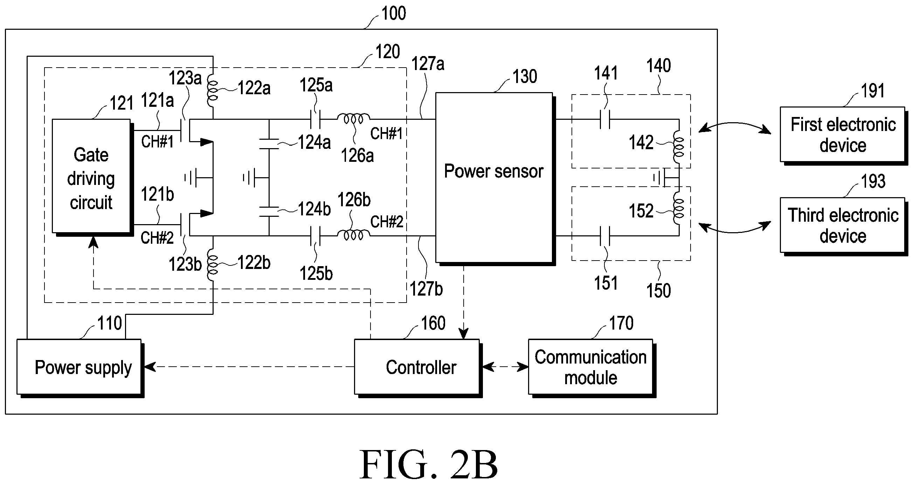

FIG. 2a illustrates a wireless power transmission device and an electronic device according to an embodiment. FIG. 2b illustrates a wireless power transmission device and an electronic device according to an embodiment.

In an embodiment, the wireless power transmission device 100 may include at least one of a power supply 110, a power converter 120, a power sensor 130, a first resonator 140, a second resonator 150, a controller 160, or a communication module 170.

In an embodiment, the power supply 110 may supply DC power to the power converter 120. The supply of DC power may be understood as at least one of application of a DC voltage or application of a DC current. The power supply 110 may receive power from at least one of a DC power source or an AC power source and output DC power. In FIG. 2a, although the power supply 110 is shown as supplying DC power to the power converter 120 through two power paths (or rails or lanes), the number of power paths is not limited. The number of power paths may correspond to, for example, the number of coils.

In an embodiment, the power converter 120 may output AC power by using the DC power received from the power supply 110. In an example, the power converter 120 may be implemented as a differential amplifier. For example, the power converter 120 may include at least one of a first amplifier 120a, a second amplifier 120b, or a gate driving circuit 121 as illustrated in FIG. 2a. The power converter 120 may be implemented as one hardware device, or each component (e.g., the first amplifier 120a, the second amplifier 120b, or the gate driving circuit 121) may be implemented independently. The gate driving circuit 121 may provide a first pulse to the first amplifier 120a through a first channel path 121a. The gate driving circuit 121 may be referred to as a pulse generator. The gate driving circuit 121 may provide a second pulse to the second amplifier 120b through a second channel path 121b. The gate driving circuit 121 may control at least one of the width, duty cycle, or voltage level of an output pulse. The gate driving circuit 121 may also control a phase difference between the first pulse and the second pulse. The first amplifier 120a and the second amplifier 120b may be implemented as, for example, Class-E amplifiers, which is exemplary, and the type of the amplifiers is not limited. A case of Class-E amplifiers will be described with reference to FIG. 2b.

In various examples, when electronic devices are detected in both the first charging area (e.g., an area for charging of the first resonator 140) and the second charging area (e.g., an area for charging of the second resonator 150), the gate driving circuit 121 may be controlled to provide pulses through both of the channel paths 121a and 121b. In this case, the gate driving circuit 121 may output the first pulse and the second pulse such that the phases of the first pulse and the second pulse are different. The phase difference may be, for example, a specified value such as 90 degrees or 180 degrees. Alternatively, the gate driving circuit 121 may adjust the phase difference based on at least one of the intensity of received power or charging efficiency of the electronic device, which will be described later in more detail.

In various examples, when an electronic device is detected only in the first charging area (e.g., the area for charging of the first resonator 140), the gate driving circuit 121 may be controlled to transmit the first pulse through the first channel path 121a. When an electronic device is detected only in the second charging area (e.g., the area for charging of the second resonator 150), the gate driving circuit 121 may be controlled to transmit the second pulse through the second channel path 121b.

The first amplifier 120a may output first AC power through the first channel output path 127a by using the DC power received from the power supply 110 and the first pulse received from the gate driving circuit 121. The second amplifier 120b may output second AC power through the second channel output path 127b by using the DC power received from the power supply 110 and the second pulse received from the gate driving circuit 121. In various examples, when electronic devices are detected in both the first charging area (e.g., the area for charging of the first resonator 140) and the second charging area (e.g., the area for charging of the second resonator 150), the first AC power and the second AC power may be provided through both of the output paths 127a and 127b, respectively. In various examples, when an electronic device is detected only in the first charging area (e.g., the area for charging of the first resonator 140), the first AC power may be provided through the first channel output path 127a. In various examples, when an electronic device is detected only in the second charging area (e.g., the area for charging of the second resonator 150), the second AC power may be provided through the second channel output path 127b.

The power sensor 130 may sense at least one of a voltage, a current, power, or impedance applied to the first resonator 140. The power sensor 130 may sense at least one of a voltage, a current, power, or impedance applied to the second resonator 150. The first resonator 140 may include a capacitor 141 and a coil 142. The second resonator 150 may include a capacitor 151 and a coil 152. While one end of the coil 142 and one end of the coil 152 are shown as grounded, this is exemplary. In another example, the coil 142 and the coil 152 may be implemented not to be connected to each other. Although the capacitors 141 and 151 are shown as connected in series to the coils 142 and 152, this is exemplary, and a coil and a capacitor may be connected in parallel in at least some resonator. Alternatively, at least some of the resonators may be implemented to include both a capacitor connected in series to a coil and a capacitor connected in parallel to the coil. The first resonator 140 may be configured to charge, for example, the first electronic device 191 disposed in the first charging area in FIG. 1a. The second resonator 150 may be configured to charge, for example, the third electronic device 193 disposed in the second charging area in FIG. 1b.

The controller 160 may be implemented as, but not limited to, a microprocessor or a micro controlling unit (MCU). Alternatively, the controller 160 may be implemented as an FPGA or a set of analog elements. When the wireless power transmission device 100 supports out-of-band communication, the communication module 170 may be implemented as, for example, a BLE communication circuit. However, as far as the communication module 170 is a circuit capable of transmitting and receiving communication signals, its communication scheme is not limited. When the wireless power transmission device 100 supports in-band communication, the communication module 170 may receive sensing data from the power sensor 130. The communication module 170 may identify the amplitude and/or frequency of a signal applied to the first resonator 140 and/or the second resonator 150 based on the sensing data from the power sensor 130. The communication module 170 may decode the amplitude and/or frequency and identify information received from the electronic device based on a decoding result.

In an embodiment, the controller 160 may perform a detection operation for the plurality of resonators 140 and 150. For example, the controller 160 may apply detection power to the plurality of resonators 140 and 150. The controller 160 may determine a resonator to be charged from among the plurality of resonators 140 and 150. For example, the controller 160 may select a resonator for transmitting power to the electronic device based on a sensing result during a detection power application period. The controller 160 may obtain a first sensing result corresponding to the first resonator 140 and a second sensing result corresponding to the second resonator 140 from the power sensor 130. The controller 160 may identify whether the first sensing result satisfies a first detection condition corresponding to the first resonator 140, and whether the second sensing result satisfies a second detection condition corresponding to the second resonator 150. When identifying that the first detection condition is satisfied and the second detection condition is not satisfied, the controller 160 may determine the first resonator 140 as a resonator to perform charging. When identifying that the second detection condition is satisfied and the first detection condition is not satisfied, the controller 160 may determine the second resonator 150 as a resonator to perform charging. When identifying that both the first detection condition and the second detection condition are satisfied, the controller 160 may determine both the first resonator 140 and the second resonator 150 as resonators to perform charging. Alternatively, when identifying that both the first detection condition and the second detection condition are satisfied, the controller 160 may compare the first sensing result with the second sensing result to select one of the first resonator 140 and the second resonator 150. For example, when operating based on the AFA standard, the controller 160 may periodically apply detection power to the resonators 140 and 150. The detection power may be called a beacon. The controller 160 may control to apply, for example, various types of detection power (e.g., a short-beacon or a long-beacon defined in the AFA standard). While controlling to apply detection power, the controller 160 may detect at least one of an impedance (or load) variation, a power variation, a voltage variation, or a current variation. Herein, a variation may be, but not limited to, any one of a difference between a current measured value and an initial measured value, a difference between a current measured value and a specified value, and a difference between a current measured value and a previous measured value.

For example, the controller 160 may periodically control the power supply 110 and/or the power converter 120 to apply first detection power to the first resonator 140 and periodically apply second detection power to the second resonator 150. The controller 160 may control, for example, the gate driving circuit 121 of the power converter 120. The controller 160 may periodically obtain a first sensing value for the first resonator 140 from the power sensor 130, and periodically obtain a second sensing value for the second resonator 150 from the power sensor 130. The controller 160 may determine whether a first variation in the impedance (reactance and/or resistance) of the first resonator 140 exceeds a first threshold based on the periodically obtained first sensed value. The controller 160 may determine whether a second variation in the impedance (reactance and/or resistance) of the second resonator 150 exceeds a second threshold based on the periodically obtained second sensing value. Although the first threshold and the second threshold may be set to be different, they may be equal in some cases.

For example, when determining that the first variation is greater than the first threshold and the second variation is equal to or less than the second threshold, the controller 160 may select the first resonator 140 as a resonator to perform charging. For example, when determining that the first variation is equal to or less than the first threshold and the second variation is greater than the second threshold, the controller 160 may select the second resonator 150 as a resonator to perform charging. For example, when the first variation is greater than the first threshold, and the second variation is greater than the second threshold, the controller 160 may compare the first variation with the second variation, and select a resonator with the greater variation. Alternatively, when the controller 160 determines that the second variation is greater than the second threshold during charging using the first resonator 140, the controller 160 may select both the first resonator 140 and the second resonator 150 as resonators to perform charging. Alternatively, when the controller 160 determines that the first variation is greater than the first threshold during charging using the second resonator 150, the controller 160 may select both the first resonator 140 and the second resonator 150 as resonators to perform charging.

In another embodiment, the controller 160 may detect an electronic device to receive wireless power based on satisfaction of another condition in addition to an impedance variation. For example, after detecting the impedance variation, the controller 160 may control to apply power for performing communication to the selected resonator. The electronic device for receiving power may use the power to wake up an MCU and/or a communication module and broadcast a communication signal (e.g., an advertisement signal). The controller 160 may receive the communication signal through the communication module 170. The controller 160 may determine whether the strength (e.g., RSSI) of the communication signal is greater than a threshold strength, as the additional condition. The controller 160 may determine whether an impedance variation is expected based on information (e.g., impedance shift information) included in the communication signal, as the additional condition.

The controller 160 may control to supply charging power to the selected resonator after detecting the electronic device. The controller 160 may, for example, perform an additional procedure (e.g., a subscription procedure) after detecting the electronic device, and perform a charging procedure. The charging procedure may include transmitting a charging start command and/or applying charging power to the electronic device. For example, when the first resonator 140 is selected, the controller 160 may control the power supply 110 and/or the power converter 120 to apply AC power to the first resonator 140. In this case, the gate driving circuit 121 may provide the first pulse to the first amplifier 120a, and the power supply 110 may supply DC power to the first amplifier 120a. For example, when the second resonator 150 is selected, the controller 160 may control the power supply 110 and/or the power converter 120 to apply AC power to the second resonator 150. In this case, the gate driving circuit 121 may provide the second pulse to the second amplifier 120b, and the power supply 110 may provide DC power to the second amplifier 120b. DC power from the power supply 110 and/or a pulse from the gate driving circuit 121 may not be applied to an amplifier corresponding to the unselected resonator.

For example, when operating based on the Qi standard, the controller 160 may periodically apply detection power (e.g., ping) to the resonators 140 and 150. The controller 160 may select a resonator based on whether a response signal (e.g., a signal including information about the strength of the ping) has been received. For example, when identifying the information of the response signal according to a decoding result of the first sensing information corresponding to the first resonator 150, the controller 1 60 may select the first resonator 150. For example, when identifying the information of the response signal according to a decoding result of the second sensing information corresponding to the second resonator 160, the controller 160 may select the second resonator 160.

FIG. 2b illustrates a wireless power transmission device and an electronic device according to an embodiment.

In an embodiment, the power converter 120 may include at least one of the gate driving circuit 121, inductors 122a, 122b, 126a, and 126b, transistors 123a and 123b, or capacitors 124a, 124b, 125a, and 125b. The coil 122a, the transistor 123a, the capacitor 124a, the capacitor 125a, and the coil 126a may form a first class-E amplifier. The first class-E amplifier may output the first AC power through the first channel output path 127a by using the first pulse received from the gate driving circuit 121 and DC power received from the power supply 110. The coil 122b, the transistor 123b, the capacitor 124b, the capacitor 125b, and the coil 126b may form a second class-E amplifier. The second class-E amplifier may output the second AC power through the second channel output path 127b by using the second pulse received from the gate driving circuit 121 and DC power received from the power supply 110.

One end of the transistor 123a and one end of the transistor 123b may be grounded. The gate driving circuit 121 may be connected to the gate of the transistor 123a through the first channel (CH#1) path 121a, and the gate driving circuit 121 may be connected to the gate of the second transistor 123b through the second channel (CH#2) path 121b. For example, during a high period of a pulse, the transistors 123a and 123b may be controlled to be on, and during a low period of the pulse, the transistors 123a and 123b may be controlled to be off, which should not be construed as limiting. The capacitors 124a and 124b may be shunt capacitors, and one ends of the capacitors 124a and 124b may be grounded. The capacitors 125a and 125b and the inductors 126a and 126b may be configured to remove a harmonic component. For example, the first pulse may be output from the gate driving circuit 120 through the first channel path 121a. The first pulse may have a high period and a low period, and its duty cycle may be, but not limited to, 50%. When the first pulse is in the high period, the transistor 123a may be controlled to be on, and in this case, a current may flow from the capacitor 125a to the ground through the transistor 123a. When the first pulse is in the low period, the transistor 123a may be controlled to be off, and in this case, a current may flow through the coil 122a, the capacitor 125a, and the coil 126a. Accordingly, AC power having a greater amplitude than the first pulse output from the gate driving circuit 120 may be output through the first channel output path 127a, and the same may be true for a Class-E amplifier corresponding to the second amplifier 120a.

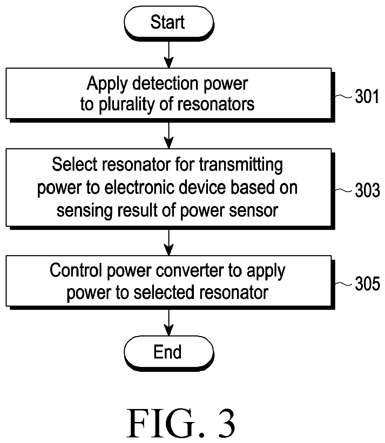

FIG. 3 is a flowchart illustrating a method of operating a wireless power transmission device according to an embodiment.

According to an embodiment, the controller 160 of the wireless power transmission device 100 may apply detection power to a plurality of resonators (e.g., the first resonator 140 and the second resonator 150) in operation 301. In operation 303, the controller 160 may select a resonator for transmitting power to an electronic device based on a sensing result sensed by the power sensor 130 during application of the detection power. It will be understood by those skilled in the art that applying detection power to a resonator is one example of the detection operation of the disclosure, and various detection operations other than applying detection power are available. The controller 160 may select a resonator for charging the electronic device based on a sensing result of various detection operations. For example, according to an AFA method, the controller 160 may periodically (or aperiodically) apply detection power to each of the plurality of resonators. The controller 160 may identify an impedance variation in each of the plurality of resonators based on information sensed while applying the detection power.

In an embodiment, the controller 160 may compare a first impedance variation in the first resonator 140 with a second impedance variation in the second resonator 140, and select a resonator for performing charging based on a comparison result. For example, when identifying that the first impedance variation is greater than the second impedance variation, the controller 160 may select the first resonator 140 as a resonator to perform charging. For example, when identifying that the second impedance variation is greater than the first impedance variation, the controller 160 may select the second resonator 150 as a resonator to perform charging. In another embodiment, when identifying that the first impedance variation satisfies the first condition, the controller 160 may select the first resonator 140 as a resonator to perform charging. For example, when identifying that the first impedance variation is equal to or greater than the first threshold, the controller 160 may select the first resonator 140 as a resonator to perform charging. When identifying that the second impedance variation satisfies the second condition, the controller 160 may select the second resonator 150 as a resonator to perform charging. For example, when identifying that the second impedance variation is equal to or greater than the second threshold, the controller 160 may select the second resonator 150 as a resonator to perform charging.

When identifying that both conditions are satisfied, the controller 160 may select both the first resonator 140 and the second resonator 150. For example, when electronic devices are disposed in both the first charging area and the second charging area, the controller 160 may identify that both conditions are satisfied. The controller 160 may control the power converter 120 to apply power to both the first resonator 140 and the second resonator 150.

Alternatively, when identifying that both conditions are satisfied, the controller 160 may compare the first impedance variation with the second impedance variation, and select a resonator to perform charging based on a comparison result. For example, when identifying that the first impedance variation is greater than the second impedance variation, the controller 160 may select the first resonator 140 as a resonator to perform charging. For example, when identifying that the second impedance variation is greater than the first impedance variation, the controller 160 may select the second resonator 150 as a resonator to perform charging.

In operation 305, the controller 160 may control the power converter 120 to apply power to the selected resonator. For example, when the first resonator 140 is selected, the controller 160 may control the first amplifier 120a to supply power to the first resonator 140, when the first resonator 140 is selected. During the time, the second amplifier 120b may not supply charging power to the second resonator 150. However, the second amplifier 120b may be controlled to periodically apply detection power to the second resonator 150. As described above, when identifying that an additional condition is satisfied, the controller 160 may control the power converter 120 to apply power to the selected resonator. For example, the additional condition may include, but not limited to, at least one of reception of a communication signal (e.g., an advertisement signal) through the communication module 170, a difference between a reception time of the communication signal and an impedance variation time within a threshold time, an RSSI of the communication signal greater than a threshold strength, an impedance variation that may be caused by information in the communication signal, establishment of a communication connection (e.g., a BLE connection), success of a subscription procedure, identification of no cross connection, or the wireless power transmission device 100 having a sufficient amount of power to charge at least one electronic device.

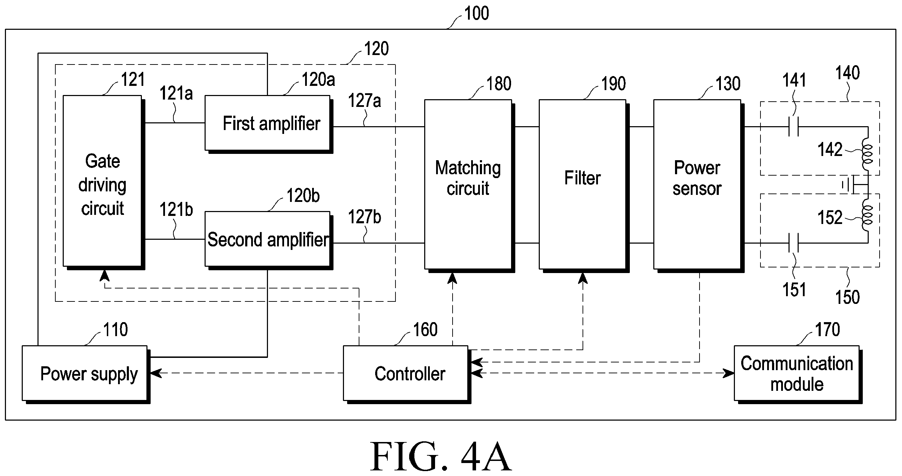

FIG. 4a illustrates a wireless power transmission device according to an embodiment.

In an embodiment, the wireless power transmission device 100 may include at least one of the power supply 110, the power converter 120, the power sensor 130, the first resonator 140, the second resonator 150, the controller 160, the communication module 170, a matching circuit, or a filter 190.

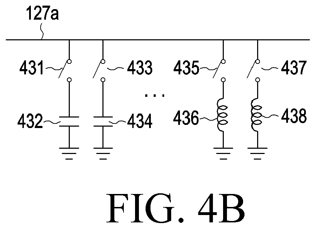

While the matching circuit 180 is shown as connected to the power converter 120 and the filter 190 in an embodiment, this is exemplary, and the connection position of the matching circuit 180 is not limited. The matching circuit 180 may include at least one element that causes an impedance variation. For example, as illustrated in FIG. 4b, the matching circuit 180 may include at least one capacitor 432 and 434 and/or at least one coil 436 and 438. One end of the at least one capacitor 432 and 434 and/or one end of the at least one coil 436 and 438 may be grounded. The other end of the at least one capacitor 432 and 434 and/or the other end of the at least one coil 436 and 438 may be connected to at least one switch 431, 433, 435, and 437, respectively. At least some of the at least one capacitor 432 and 434 and/or the at least one coil 436 and 438 may be connected to a resonator (e.g., the first resonator 140) according to the on/off state of each of the at least one switch 431, 433, 435, and 437. The matching circuit 180 of FIG. 4b is merely exemplary, and it will be appreciated by those skilled in the art that there is no limitation as long as the matching circuit 180 is a circuit that may be connected to cause a variation of an impedance magnitude.

In an example, the controller 160 may control the on/off state of each of the at least one switch 431, 433, 435, and 437 based on a sensing result from the power sensor 130. For example, the power sensor 130 may include a coupler connected to the resonators 140 and 150, and sense the magnitude of at least one of a voltage, a current, or power received through the coupler. The controller 160 may identify the magnitude of a reflected wave based on a result sensed through the coupler. The controller 160 may determine whether to adjust an impedance matching state based on the magnitude of the reflected wave. For example, when the magnitude of the reflected wave is greater than a threshold magnitude, the controller 160 may determine to adjust the impedance matching state. For example, when the ratio of the magnitude of the reflected wave to the magnitude of input power is less than a threshold ratio, the controller 160 may determine to adjust the impedance matching state. When determining to adjust the impedance matching state, the controller 160 may adjust the on/off state of at least some of the at least one switch 431, 433, 435, and 437 in the matching circuit 180. In an example, the controller 160 may perform the impedance matching state adjustment until determining that the impedance matching state adjustment is not required according to the sensing result. When determining that the impedance matching state adjustment is required even in all combinations of the on/off states of the at least one switch 431, 433, 435, and 437, the controller 160 may control the matching circuit 180 to have an optimal impedance matching state. For example, the controller 160 may control the matching circuit 180 to have an impedance matching state in which the reflected wave becomes weakest.

Alternatively, the controller 160 may adjust the matching circuit 180 based on information received from an electronic device through the communication module 170. The electronic device may transmit, to the wireless power transmission device 100, a communication signal including the magnitude of power received after starting charging (e.g., the magnitude of a voltage and/or a current at an output terminal of a rectifier in the electronic device). The controller 160 determines whether to adjust the impedance matching state based on the information (e.g., the magnitude of the voltage and/or the current at the output terminal of the rectifier in the electronic device) received through the communication module 170. For example, when the magnitude of the voltage and/or the current at the output terminal of the rectifier in the electronic device is less than a threshold magnitude, the controller 160 may determine to adjust the impedance matching state. When determining to adjust the impedance matching state, the controller 160 may adjust the on/off state of at least some of the at least one switch 431, 433, 435, and 437 in the matching circuit 180. In an example, the controller 160 may perform the impedance matching state adjustment until determining that the impedance matching state adjustment is not required according to the sensing result. When determining that the impedance matching state adjustment is required even in all combinations of the on/off states of the at least one switch 431, 433, 435, and 437, the controller 160 may control the matching circuit 180 to have an optimal impedance matching state. For example, the controller 160 may control the matching circuit 180 to have an impedance matching state that maximizes the magnitude of the voltage and/or the current at the output terminal of the rectifier in the electronic device.

In an embodiment, the filter 190 may be connected between the matching circuit 180 and the power sensor 130. However, the connection position of the filter 190 is not limited. For example, the filter 190 may be configured to filter out a harmonic component in input AC power. The filter 190 may be a passive filter or an active filter, and the type of the filter 190 is not limited. For example, the passive filter may include, for example, a coil and a capacitor capable of absorbing a harmonic component. The coil and the capacitor may absorb a harmonic component, thus filtering out the harmonic component included in the AC power. For example, the active filter may detect a harmonic component and generate a reverse current corresponding to the harmonic component, thereby filtering out the harmonic component.

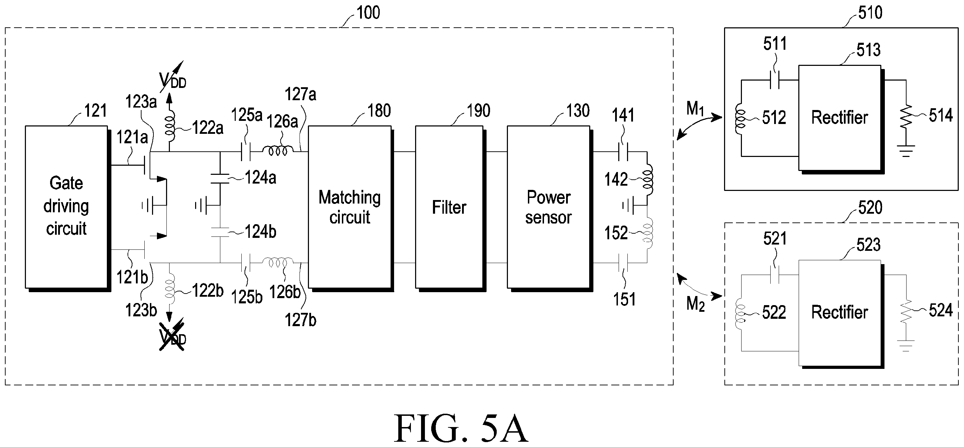

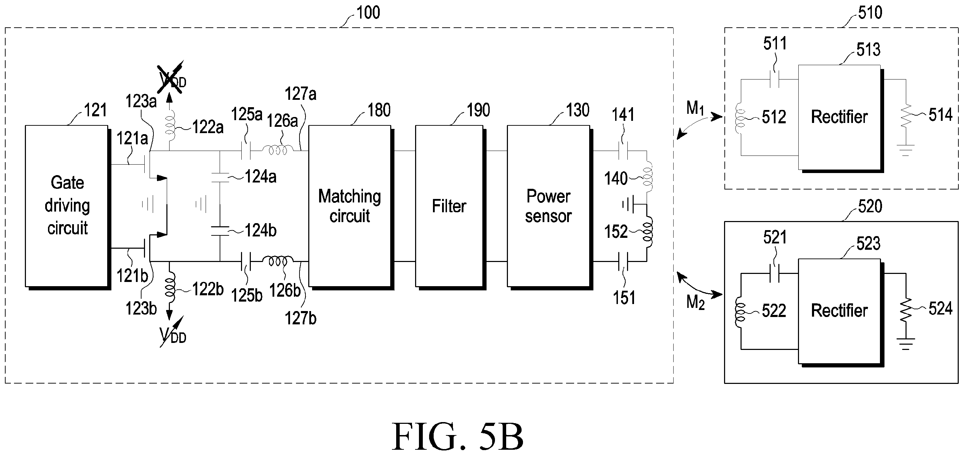

FIGS. 5a and 5b illustrate a wireless power transmission device according to an embodiment.

For convenience of description, it will be understood by those skilled in the art that some components of the wireless power transmission device 100 are omitted in FIGS. 5a and 5b. First, referring to FIG. 5a, the controller 160 of the wireless power transmission device 100 may detect a first electronic device 510. The controller 160 may apply detection power to the coil 142, and identify that an impedance variation is greater than the first threshold. Accordingly, the controller 160 may identify that the first electronic device 510 is disposed in the first charging area associated with the coil 142. Although the controller 160 may apply detection power to the coil 152, it may identify that an impedance variation in the coil 152 is not greater than the second threshold. The controller 160 may select the first resonator 140 based on the sensing result.

The controller 160 may control the gate driving circuit 121 to provide the first pulse to the transistor 123a through the first channel path 121a and not to provide the second pulse through the second channel path 121b. For example, the on/off state of the transistor 123a may be controlled according to an on/off period of the first pulse. According to the operation of the class-E amplifier, the first AC power corresponding to the first pulse may be output through the first channel output path 127a. The second pulse may not be provided through the second channel path 121b. The controller 160 may control the power supply 110 not to apply a driving voltage V_{DD} to the second coil 122b. Accordingly, the second AC power may not be output through the second channel output path 127b. Accordingly, only the first AC power may be provided to the first resonator 140. The first electronic device 510 may include a capacitor 511, a coil 512, a rectifier 513, and a load 514. The rectifier 513 may rectify AC power from the coil 512 according to an induced electromotive force.

Next, referring to FIG. 5b, the controller 160 may detect a second electronic device 520. The controller 160 may apply detection power to the coil 152, and identify that an impedance variation is greater than the second threshold. Accordingly, the controller 160 may identify that the second electronic device 520 is disposed in the second charging area associated with the first coil 152. Although the controller 160 may apply detection power to the coil 142, the controller 160 may identify that an impedance variation in the coil 142 is not greater than the first threshold. The controller 160 may select the second resonator 150 based on the sensing result.

The controller 160 may control the gate driving circuit 121 not to provide the first pulse to the transistor 123a through the first channel path 121a, and to provide the second pulse through the second channel path 121b. For example, the on/off state of the transistor 123b may be controlled according to an on/off period of the second pulse. According to the operation of the class-E amplifier, the second AC power corresponding to the second pulse may be output through the second channel output path 127b. The first pulse may not be provided through the first channel path 121a. The controller 160 may control the power supply 110 not to apply the driving voltage V_{DD} to the coil 122a. Accordingly, the first AC power may not be output through the first channel output path 127a. Accordingly, only the second AC power may be provided to the first resonator 150. The second electronic device 520 may include a capacitor 521, a coil 522, a rectifier 523, and a load 524. The rectifier 523 may rectify AC power from the coil 522 according to an induced electromotive force.

The controller 160 may detect electronic devices in all charging areas corresponding to both of the resonators 140 and 150. While not shown, the controller 160 may control the gate driving circuit 121 to output the first pulse through the first channel path 121a and output the second pulse through the second channel path 121b. The controller 160 may control the gate driving circuit 121 to output the first pulse and the second pulse with a specified phase difference (e.g., 90 degrees or 180 degrees).Alternatively, upon receipt of a command to output pulses through both of the channel paths 121a and 121b from the controller 160, the gate driving circuit 121 may output the first pulse and the second pulse with the specified phase difference set by the gate driving circuit 121.

In an embodiment, the controller 160 may identify a sensing result of the power sensor 130 and/or the magnitude of power received from an electronic device (e.g., a voltage and/or current at an output terminal of a rectifier in the electronic device). The controller 160 may control the gate driving circuit 121 to adjust the phase difference between the first pulse and the second pulse based on the identified information. The controller 160 may adjust the phase difference such that the sensing result of the power sensor 130 and/or the magnitude of the power received from the electronic device is optimized. For example, the controller 160 may adjust the phase difference to minimize the magnitude of a reflected wave from a resonator according to the sensing result of the power sensor 130. For example, the controller 160 may adjust the phase difference such that the magnitude of the voltage and/or current at the output terminal of the rectifier in the electronic device is maximized. In an example, the controller 160 may determine the optimized phase difference while adjusting the phase difference by a preset unit (e.g., 1 degree). However, the method of determining an optimized phase difference is not limited.

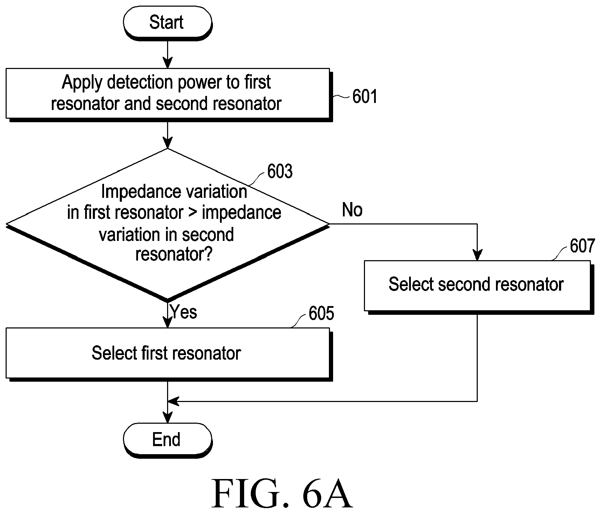

FIG. 6a is a flowchart illustrating a method of operating a wireless power transmission device according to an embodiment.

Referring to FIG. 6a, the controller 160 of the wireless power transmission device 100 may control to apply detection power to the first resonator 140 and the second resonator 150 in operation 601. For example, the controller 160 may control to periodically apply the detection power. In operation 603, the controller 160 may determine whether an impedance variation in the first resonator is greater than an impedance variation in the second resonator. When determining that the impedance variation in the first resonator is greater than the impedance variation in the second resonator (603-Yes), the controller 160 may select the first resonator 140 in operation 605. Additionally, the controller 160 may be configured to select the first resonator 140, when the impedance variation in the first resonator is greater than the first threshold. When the impedance variation in the first resonator is not greater than the first threshold, the controller 160 may select no resonator.

When determining that the impedance variation in the second resonator is greater than or equal to the impedance variation in the first resonator (603-No), the controller 160 may select the second resonator 150 in operation 607. Additionally, the controller 160 may be configured to select the second resonator 150, when the impedance variation in the second resonator is greater than the second threshold. When the impedance variation in the second resonator is not greater than the second threshold, the controller 160 may select no resonator.

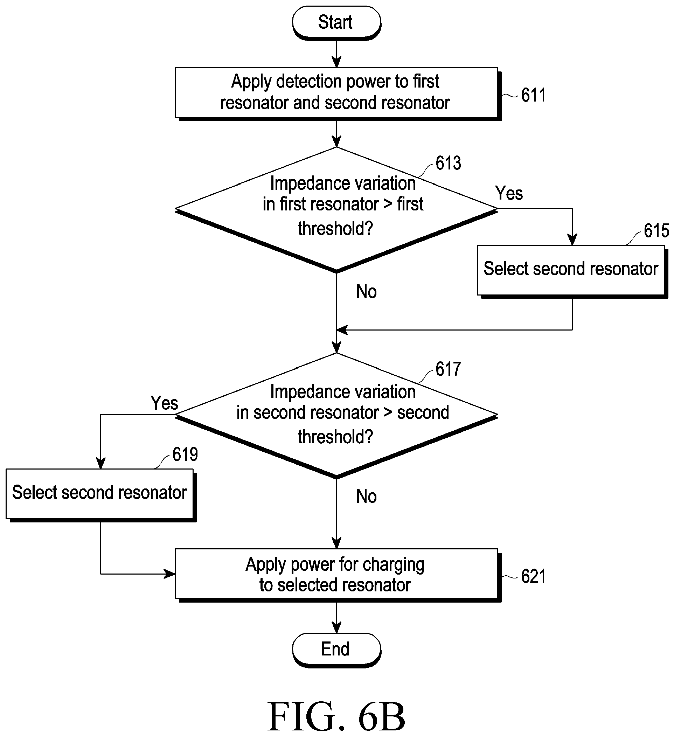

FIG. 6b is a flowchart illustrating a method of operating a wireless power transmission device according to an embodiment.

Referring to FIG. 6b, the controller 160 of the wireless power transmission device 100 may control to apply detection power to the first resonator 140 and the second resonator 150 in operation 611. For example, the controller 160 may control to periodically apply the detection power. In operation 613, the controller 160 may determine whether an impedance variation in the first resonator is greater than the first threshold. When determining that the impedance variation in the first resonator is greater than the first threshold (613-Yes), the controller 160 may select the first resonator 140 in operation 615. In operation 617, the controller 160 may determine whether an impedance variation in the second resonator is greater than the second threshold. When determining that the impedance variation in the second resonator is greater than the second threshold (617-Yes), the controller 160 may select the second resonator in operation 619. In operation 621, the controller 160 may control to apply charging power to the selected resonator. For example, once the resonator is selected, the controller 160 may control to apply charging power immediately. Alternatively, the controller 160 may control to apply charging power, after identifying whether the various additional conditions described above are satisfied.

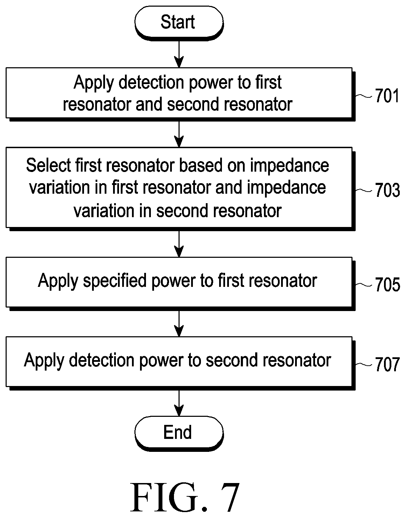

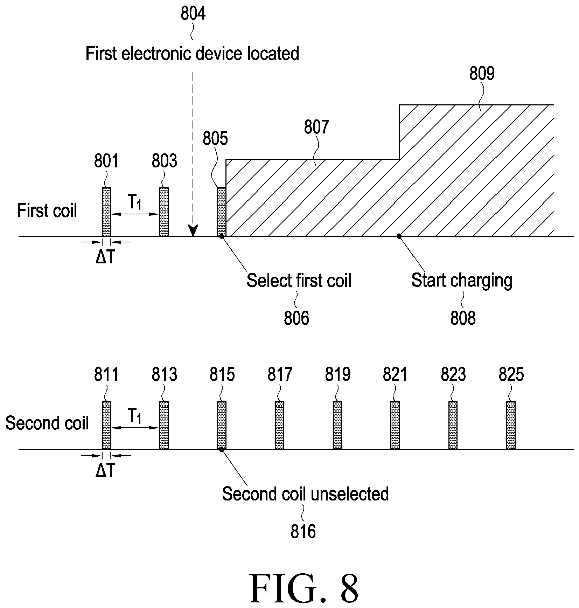

FIG. 7 is a flowchart illustrating a method of operating a wireless power transmission device according to an exemplary embodiment. The embodiment of FIG. 7 will be described in more detail with reference to FIG. 8. FIG. 8 is a diagram referred to for describing power applied to each resonator according to an embodiment.

Referring to FIG. 7, the controller 160 according to an embodiment may apply detection power to the first resonator 140 and the second resonator 150 in operation 701. For example, referring to FIG. 8, the controller 160 may control the power supply 110 and/or the power converter 120 to periodically apply detection powers 801, 803, and 805 to the coil 142 of the first resonator 140. The detection powers 801, 803, and 805 may be applied during a first duration ΔT at intervals of a first period T₁. The detection powers 801, 803, and 805 may be, for example, a short beacon in the AFA standard. While the detection powers 801, 803, and 805 are shown as having the same magnitude in FIG. 8, this is only exemplary. The magnitudes of the detection powers 801, 803, and 805 may be equal or different from each other. While not shown, the controller 160 may additionally apply a different type of detection power (e.g., a long beacon in the AFA standard), and the other type of detection power may have a different duration and a different periodicity from the detection powers 801, 803, and 805. The controller 160 may identify an impedance variation in the first resonator 140 based on a result sensed during the application of the detection powers 801, 803, and 805. The controller 160 may identify an impedance variation in the second resonator 150 based on the result sensed during the application of the detection powers 811, 813, and 815.

In operation 703, the controller 160 may select the first resonator 140 based on the impedance variation in the first resonator 140 and the impedance variation in the second resonator 150. For example, as illustrated in FIG. 8, the first electronic device 191 may be located on the first resonator 140 in operation 804. The controller 160 may determine that the impedance variation in the first resonator 140 is greater than the first threshold based on the sensing result during the application of the detection power 815. The controller 160 may select the coil 142 based on determining that the impedance variation in the first resonator 140 being greater than the first threshold in operation 806. On the other hand, the controller 160 may determine that the impedance variation in the second resonator 150 is equal to or less than the second threshold based on the sensing result during the application of the detection power 815. The controller 160 may not select the coil 152 based on determining that the impedance variation in the second resonator 150 is equal to or less than the second threshold in operation 816.

In operation 705, the controller 160 may control to apply specified power to the first resonator 140. For example, as illustrated in FIG. 8, the controller 160 may apply power 807 of a low power state defined in the AFA standard. That is, the specified power may be power determined by the standard, which is merely exemplary. The first electronic device 191 may wake up the MCU and/or the BLE module of the first electronic device 191 by using a magnetic field generated by the power 807, and transmit a communication signal (e.g., an advertisement signal) through the BLE module. The controller 160 may receive the communication signal from the first electronic device 191 through the communication module 170, and determine whether to perform charging based on whether an additional condition based on the communication signal is satisfied. The application of the specified power and/or the satisfaction of the additional condition is optional and may be omitted. The controller 160 may be implemented to start charging immediately after detection of the first electronic device 191.

The controller 160 may start charging in operation 808. The controller 160 may control to apply charging power 809 to the first resonator 140. The controller 160 may transmit a communication signal (e.g., a PRU control signal in the AFA standard) instructing to start charging through the communication module 170.

In operation 707, the controller 160 may periodically apply detection power to the second resonator 150. The controller 160 may maintain periodic application of detection powers 817, 819, 821, 823, and 825 according to the non-selection of the coil 152 in operation 816. As described above, the controller 160 may independently manage the state of the first resonator 140 and the state of the second resonator 150.

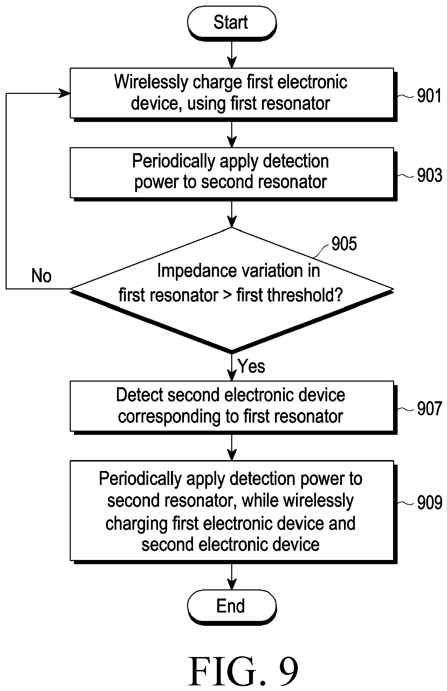

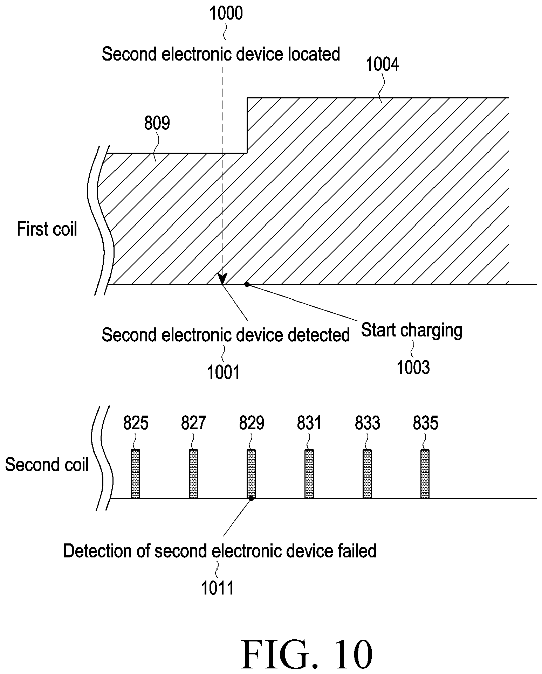

FIG. 9 is a flowchart illustrating a method of operating a wireless power transmission device according to an embodiment. The embodiment of FIG. 9 will be described in more detail with reference to FIG. 10. FIG. 10 is a diagram referred to for describing power applied to each resonator according to an embodiment.

Referring to FIG. 9, the controller 160 according to an embodiment may wirelessly charge the first electronic device 191 by using the first resonator 140 in operation 901. In operation 903, the controller 160 may control to periodically apply detection power to the second resonator 150. For example, as described with reference to FIGS. 7 and 8, the controller 160 may select only the first resonator 140 without selecting the second resonator 150. For example, as illustrated in FIG. 10, charging power 809 may be applied to the first resonator 140. In this case, the controller 160 may periodically apply detection powers 825, 827, 829, 831, 833, and 835 to the unselected second resonator 150.

In operation 905, the controller 160 may determine whether an impedance variation in the first resonator 140 is greater than the first threshold. When determining that the impedance variation in the first resonator 140 is greater than the first threshold (905-Yes), the controller 160 may detect an additional second electronic device corresponding to the first resonator 140 in operation 907. When determining that the impedance variation in the first resonator 140 is not greater than the first threshold (905-No), the controller 160 may maintain the wireless charging using the first resonator 140 and the application of detection power using the second resonator. For example, in operation 1000, the second electronic device 192 may be additionally disposed while the first electronic device 191 is disposed on the top surface of the pad-shaped housing of the wireless power transmission device 100 and wirelessly charged. The controller 160 may detect the second electronic device 192 in operation 1001. For example, the controller 160 may receive a sensing result from the power sensor 130 periodically or aperiodically while applying the charging power 809. The controller 160 may identify an impedance variation between an immediately previous sensed impedance and a current sensed impedance. The controller 160 may determine that the identified impedance variation is greater than the first threshold. Based on the impedance variation being greater than the first threshold, the controller 160 may detect an additional arrangement of the second electronic device 192. The first threshold for determining whether an additional electronic device has been detected may be set to be equal to or different from a threshold for detecting an initial arrangement. Alternatively, the controller 160 may identify an impedance variation between a current measured impedance and a preset reference value (or an initial measured impedance). In this case, the controller 160 may determine that the impedance variation corresponds to two electronic devices and thus determine that the additional second electronic device 192 has been disposed, and the detection method is not limited.

On the other hand, after the second electronic device 192 is disposed in the first charging area corresponding to the first resonator 140, the controller 160 may apply the detection power 829 to the second resonator 150. The controller 160 may identify an impedance variation in the second resonator 150 based on a result sensed during the application of the detection power 829. In this case, since the second electronic device 192 has been disposed in the first charging area corresponding to the first resonator 140, a large impedance variation in the second resonator 150 may not be caused. The controller 160 may determine that the impedance variation in the second resonator 150 is less than or equal to the second threshold, and thus fail in detecting the second electronic device 192 in operation 1011. As a plurality of electronic devices are disposed in correspondence with the first resonator 140, it is likely to be determined that the detection condition is also satisfied in the second resonator 140. In this case, the controller 160 may adjust the threshold for the second resonator 150, when the first resonator 140 is in a charging state and the second resonator 150 is in a detection state. Accordingly, the probability of false detection of the 2 resonator 150 may be reduced.

In operation 909, the controller 160 may periodically apply detection power to the second resonator 150, while wirelessly charging the first electronic device 191 and the additionally disposed second electronic device 192. After detecting the additional second electronic device 192 in the first charging area corresponding to the first resonator 140, the controller 160 may start charging in operation 1003. As described above, the controller 160 may be configured to perform additional operations (e.g., communication connection establishment and communication signal transmission/reception) with the second electronic device 192, and then start charging. As the charging starts, the controller 160 may apply power 1004 for simultaneous charging of the first electronic device 191 and the second electronic device 192 to the first resonator 140. The first electronic device 191 and the second electronic device 192 may perform charging based on a magnetic field from the first resonator 140. While the power 1004 for simultaneous charging of the first electronic device 191 and the second electronic device 192 is shown in FIG. 10 as greater than the power 809 for the ongoing charging of the first electronic device 191, this is exemplary, and the wireless power transmission device 160 may apply power having a magnitude equal to or smaller than that of the existing power.

Since the controller 160 has failed to detect the second electronic device 192 in the second charging area corresponding to the second resonator 150, the controller 160 may maintain the application of the detection powers 831, 833, and 835 to the second resonator 150.

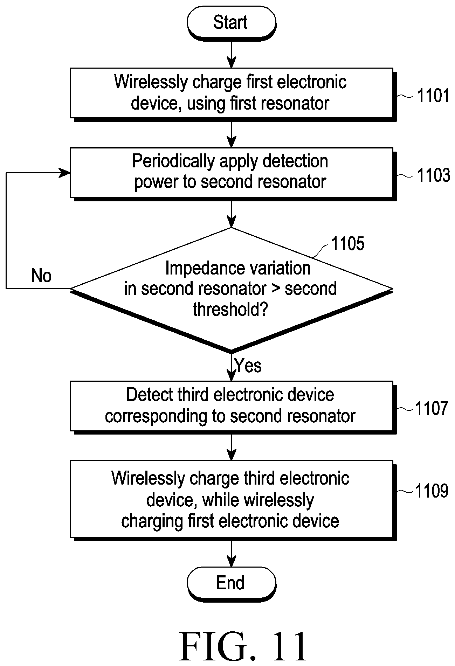

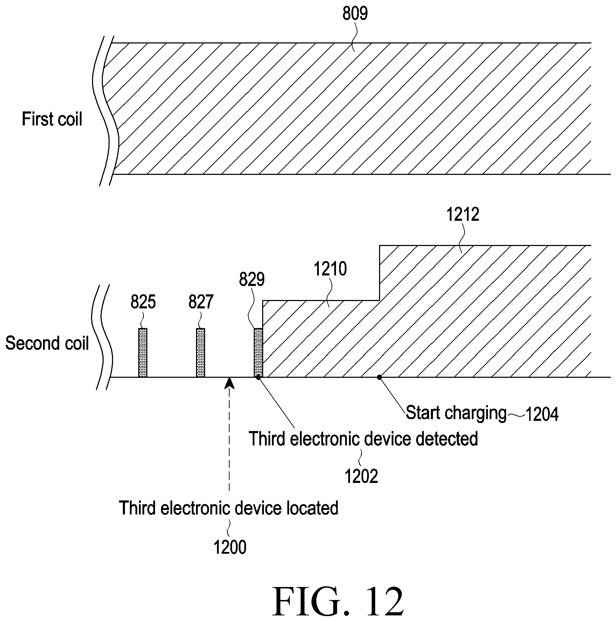

FIG. 11 is a flowchart illustrating a method of operating a wireless power transmission device according to an embodiment. The embodiment of FIG. 11 will be described in more detail with reference to FIG. 12. FIG. 12 is a diagram referred to for describing power applied to each resonator according to an embodiment.

Referring to FIG. 11, the controller 160 according to an embodiment may wirelessly charge the first electronic device 191 using the first resonator 140 in operation 1101. In operation 1103, the controller 160 may control to periodically apply detection power to the second resonator 150. For example, as described with reference to FIGS. 7 and 8, the controller 160 may select only the first resonator 140 without selecting the second resonator 150. For example, as illustrated in FIG. 12, the charging power 809 may be applied to the first resonator 140. In this case, the controller 160 may control the power supply 110 and/or the power converter 120 to periodically apply detection powers 825, 827, and 829 to the unselected second resonator 150.

In operation 1105, the controller 160 may determine whether an impedance variation in the second resonator 150 is greater than the second threshold. When the impedance variation in the second resonator 150 is less than or equal to the second threshold (1105-No), the controller 160 may control to charge using the first resonator 140 and to periodically apply detection power to the second resonator 150. When the impedance variation in the second resonator 150 is greater than the second threshold (1105-Yes), the controller 160 may detect the third electronic device 193 corresponding to the second resonator 150 in operation 1107. For example, referring to FIG. 12, the third electronic device 193 may be disposed on the second charging area corresponding to the second resonator 150 (e.g., the area around the wireless power transmission device 100 in FIG. 1a) in operation 1200. The controller 160 may determine that the impedance variation in the second resonator 150 is greater than the second threshold based on a result sensed by the power sensor 130 during the application of the detection power 829. In operation 1202, the controller 160 may detect the third electronic device 193. On the other hand, the controller 160 may determine that an additional impedance variation in the first resonator 140 is not greater than the first threshold, and thus maintain the application of the power 809 for charging the first electronic device 191 to the first resonator 140.

In operation 1109, the controller 160 may control to wirelessly charge the third electronic device 193, while wirelessly charging the first electronic device 191. For example, as in FIG. 12, the controller 160 may detect the third electronic device 193 in operation 1202, and based on the detection, apply power 1210 in a low power state defined in the AFA standard. The third electronic device 193 may wake up the MCU and/or the BLE module of the third electronic device 193 by using a magnetic field generated by the power 1210, and transmit a communication signal (e.g., an advertisement signal) through the BLE module. The controller 160 may receive the communication signal from the third electronic device 193 through the communication module 170, and determine whether to perform charging based on whether an additional condition based on the communication signal is satisfied. The application of the specified power and/or the satisfaction of the additional condition is optional and may be omitted, and the controller 160 may be implemented to start charging immediately after detecting the third electronic device 193.

The controller 160 may start charging in operation 1204. The controller 160 may control to apply charging power 1212 to the second resonator 150. The controller 160 may transmit a communication signal instructing to start charging (e.g., a PRU control signal in the AFA standard) to the third electronic device 193 through the communication module 170.

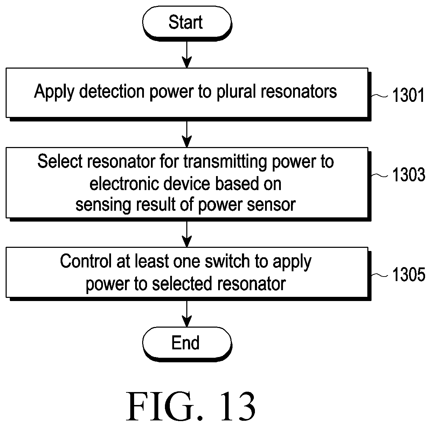

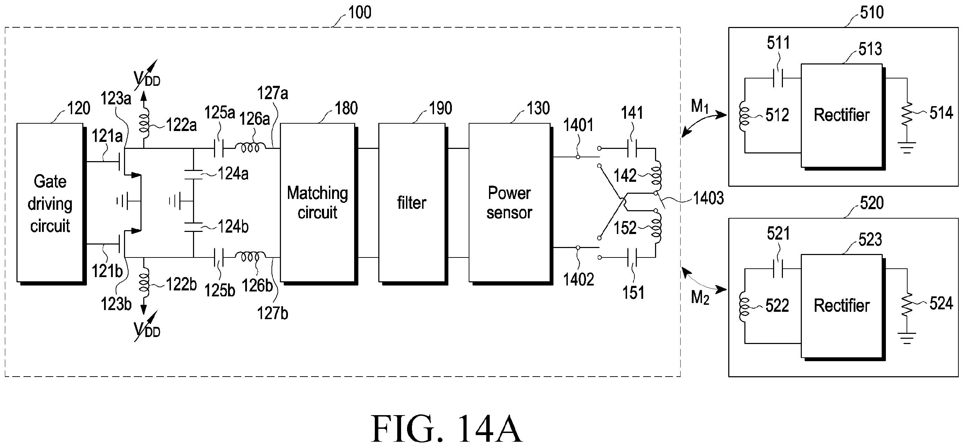

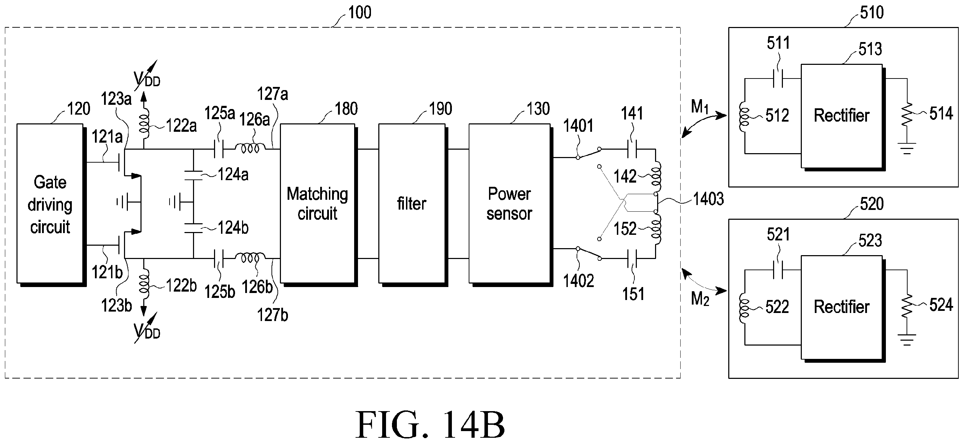

FIG. 13 illustrates a method of operating a wireless power transmission device according to an embodiment. The embodiment of FIG. 13 will be described in more detail with reference to FIGS. 14a to 14d. FIGS. 14a to 14d illustrate a wireless power transmission device and an electronic device according to various embodiments. For convenience of description, it will be understood by those skilled in the art that some components of the wireless power transmission device 100 are omitted in FIGS. 14a to 14d.

According to an embodiment, the controller 160 of the wireless power transmission device 100 may control to apply detection power to a plurality of resonators (e.g., the first resonator 140 and the second resonator 150) in operation 1301. In operation 1303, the controller 160 may select a resonator for transmitting power to an electronic device based on a sensing result of the power sensor 130. Operations 1301 and 1303 have been described above in detail, and thus their detailed description will be avoided herein.

The controller 160 may control at least one switch so that power is applied to the selected resonator in operation 1305. For example, as illustrated in FIG. 14a, the wireless power transmission device 100 may include at least one switch 1401, 1402, and 1403 capable of changing a connection state of a coil. Although the at least one switch 1401, 1402, and 1403 is shown in FIG. 14a as an analog switch, it will be understood by those skilled in the art that this is merely exemplary, and the type of the switch is not limited. Referring further to FIG. 14a, a first switch 1401 and a second switch 1402 may be implemented as single pole double throw (SPDT) switches, and a third switch 1403 may be implemented as a single pole single throw (SPST) switch. The first switch 1401 may selectively connect the power sensor 130 to either the capacitor 141 or the coil 152. The second switch 1402 may selectively connect the power sensor 130 to either the capacitor 151 or the coil 142. The third switch 1403 may selectively connect between the coil 142 and the coil 152.

For example, as illustrated in FIG. 14a, the first electronic device 510 may be disposed in the first charging area corresponding to the coil 142, and the second electronic device 520 may be disposed in the second charging area corresponding to the coil 152. The controller 160 may determine that the electronic devices 510 and 520 have been detected in both the first charging area and the second charging area. The controller 160 may control to connect the first switch 1401 to the capacitor 141, control to connect the second switch 1402 to the capacitor 151, and control the third switch 1403 to connect between the coils 142 and 152, so that both the coils 142 and 152 are connected to the power sensor 130. The controller 160 may control the gate driving circuit 120 to output the first pulse through the first channel path 121a and output the second pulse through the second channel path 121b. The controller 160 may control the power supply 110 to apply the driving voltage V_{DD} to each of the coil 122a and the coil 122b. Accordingly, the coil 142 may emit a first magnetic field to the first charging area, and the coil 152 may emit a second magnetic field to the second charging area. The first electronic device 510 may perform wireless charging based on the first magnetic field, and the second electronic device 520 may perform wireless charging based on the second magnetic field. In an example, the controller 160 may control the gate driving circuit 120 to output the first pulse and the second pulse with a phase difference set to charge the two electronic devices 510 and 520. Alternatively, the controller 160 may provide the gate driving circuit 120 with information indicating that the two electronic devices 510 and 520 are charged, and the gate driving circuit 120 may output generates the first pulse and the second pulse with a corresponding phase difference based on the received information. The phase difference is, for example, a preset value for high-efficiency charging of the two electronic devices 510 and 520, and may be, for example, 90 degrees. However, the value of the phase difference is not limited.

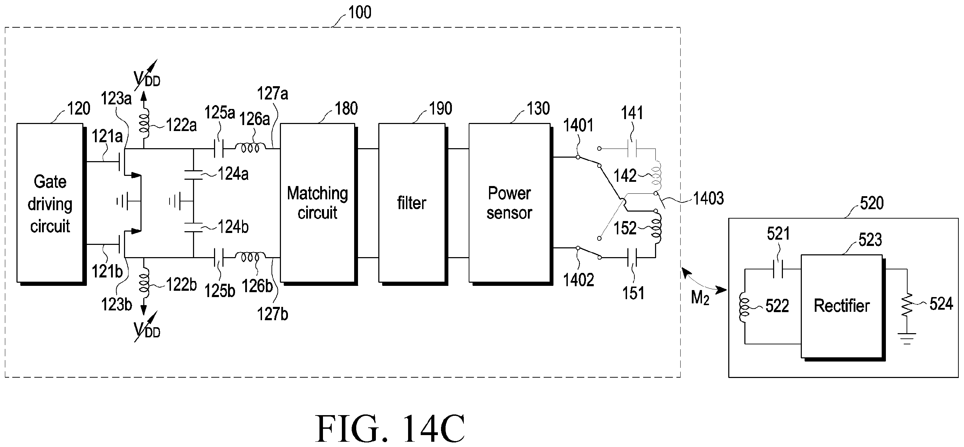

In the embodiment of FIG. 14c, it is assumed that the controller 160 detects the second electronic device 520 in the second charging area corresponding to the coil 152, and fails to detect an electronic device in the first charging area corresponding to the coil 142. The controller 160 may control to connect the coil 152 to the power sensor 130 and not to connect the coil 142 to the power sensor 130. The controller 160 may control to connect the first switch 1401 to the coil 152, control to connect the second switch 1402 to the capacitor 151, and control the third switch 1403 not to connect between both coils 142 and 152. Accordingly, the coil 142 may not be connected to the power sensor 130, whereas the coil 152 may be connected to the power sensor 130. The controller 160 may control the gate driving circuit 120 to output the first pulse through the first channel path 121a and output the second pulse through the second channel path 121b. The controller 160 may control the power supply 110 to apply the driving voltage V_{DD} to each of the coil 122a and the coil 122b. Accordingly, the coil 152 may emit the second magnetic field to the second charging area. The second electronic device 520 may perform wireless charging based on the second magnetic field. In an example, the controller 160 may control the gate driving circuit 120 to output the first pulse and the second pulse with a phase difference set to charge the single second electronic device 520. Alternatively, the controller 160 may provide the gate driving circuit 120 with information indicating that one electronic device 510 or 520 is charged, and the gate driving circuit 120 may output the first pulse and the second pulse with a corresponding phase difference based on the received information. The phase difference is, for example, a preset value for high-efficiency charging of one electronic device, and may be, for example, 180 degrees. However, the value of the phase difference is not limited. Although the phase difference set for high-efficiency charging of two electronic devices and the phase difference set for high-efficiency charging of one electronic device may be different, they may be equal depending on implementation.

For example, when identifying that a plurality of electronic devices are disposed in an area (e.g., the second charging area) around the wireless power transmission device 100, the wireless power transmission device 100 may transmit a relatively large amount of power through switch control, as illustrated in FIG. 14c.

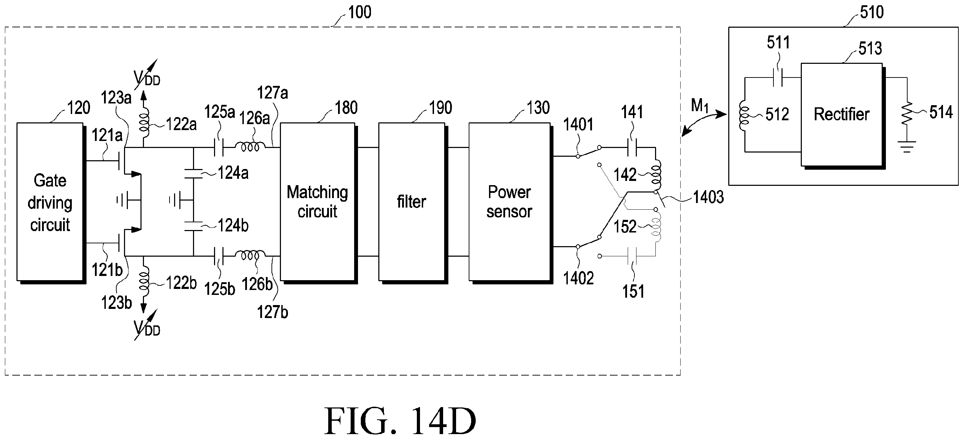

In the embodiment of FIG. 14d, it is assumed that the controller 160 detects the first electronic device 510 in the first charging area corresponding to the coil 142, and fails to detect an electronic device in the second charging area corresponding to the coil 152. The controller 160 may control not to connect the coil 152 to the power sensor 130, and to connect the coil 142 to the power sensor 130. The controller 160 may control to connect the first switch 1401 to the capacitor 141, control to connect the second switch 1402 to the coil 142, and control the third switch 1403 not to connect between both of the coils 142 and 152. Accordingly, the coil 152 may not be connected to the power sensor 130, whereas the coil 142 may be connected to the power sensor 130. In addition, as described above, the controller 160 may control the gate driving circuit 120 to output the first pulse through the first channel path 121a and output the second pulse through the second channel path 121b. The first pulse and the second pulse may have a phase difference set for high efficiency of one electronic device. The controller 160 may control the power supply 110 to apply the driving voltage V_{DD} to each of the coil 122a and the coil 122b. Accordingly, the coil 152 may emit the second magnetic field to the second charging area. The first electronic device 510 may perform wireless charging based on the first magnetic field.

For example, when identifying that a plurality of electronic devices are disposed in an area (e.g., the first charging area) on the top surface of the pad housing of the wireless power transmission device 100, the wireless power transmission device 100 may transmit a relatively large amount of power through switch control, as illustrated in FIG. 14d.

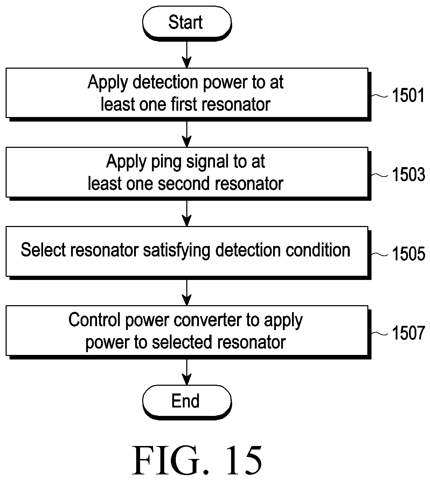

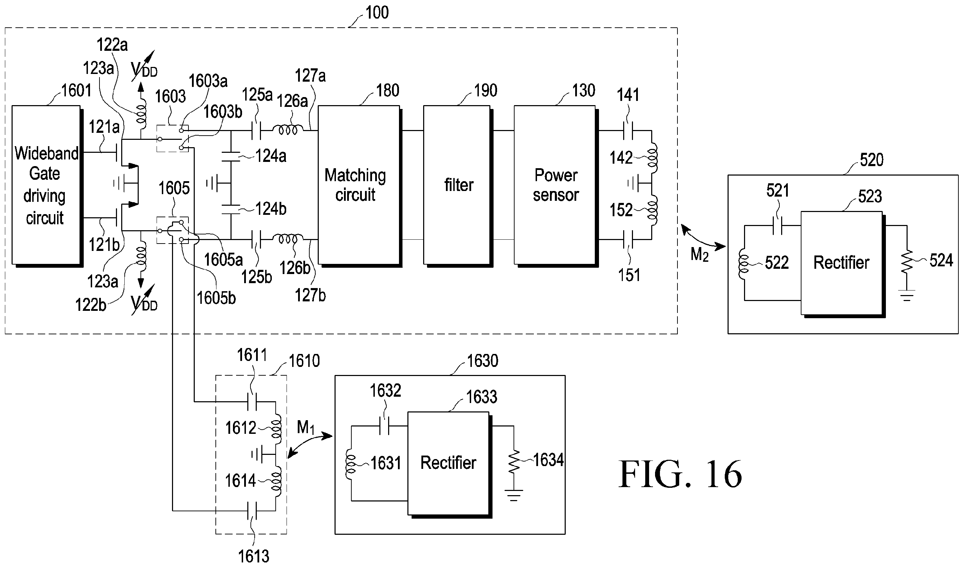

FIG. 15 illustrates a method of operating a wireless power transmission device according to an embodiment. The embodiment of FIG. 15 will be described in more detail with reference to FIG. 16. FIG. 16 illustrates a wireless power transmission device and an electronic device according to an embodiment. For convenience of description, it will be understood by those skilled in the art that some components of the wireless power transmission device 100 are omitted in FIG. 16.

According to an embodiment, the controller 160 of the wireless power transmission device 100 may control to apply detection power to at least one first resonator in operation 1501. The at least one first resonator may be a resonator operating according to a first wireless charging scheme (e.g., a scheme based on the AFA standard). The controller 160 may control to apply a ping signal to at least one second resonator in operation 1503. The at least one second resonator may be a resonator operating according to a second wireless charging scheme (e.g., a scheme based on the Qi standard).

For example, as illustrated in FIG. 16, the wireless power transmission device 100 may include a wideband gate driving circuit 1601. The wideband gate driving circuit 1601 may be configured to generate a pulse having a frequency included in a first frequency band (e.g., a frequency band including 6.78MHz) corresponding to the first wireless charging scheme (e.g., the scheme based on the AFA standard) and a second frequency band (e.g., 100kHz to 205kHz) corresponding to the second wireless charging scheme (e.g., the scheme based on the Qi standard).

Further, as illustrated in FIG. 16, the wireless power transmission device 100 may include a first switch 1603 and a second switch 1605. The first switch 1603 and the second switch 1605 may be SPDT switches. The first switch 1603 may selectively connect the first channel path 121a of the wideband gate driving circuit 1601 to either a node 1603a or a node 1603b through the transistor 121a. The second switch 1605 may selectively connect the second channel path 121b of the wideband gate driving circuit 1601 to either a node 1605a or a node 1605b through the transistor 121b.

To apply detection power to the coils 142 and 152 supporting the first wireless charging scheme, the controller 160 may control to connect the first switch 1603 to the node 1603a and connect the second switch 1605 to the node 1605a. During the time, the controller 160 may control the wideband gate driving circuit 1601 to output a pulse having a frequency included in the first frequency band to each of the first channel path 127a and the second channel path 127b. To apply a ping signal to the coils 1612 and 1614 supporting the second wireless charging scheme, the controller 160 may control to connect the first switch 1603 to the node 1603b and connect the second switch 1605 to the node 1605b. During the time, the controller 160 may control the wideband gate driving circuit 1601 to output a pulse having a frequency included in the second frequency band to each of the first channel path 127a and the second channel path 127b. AC power may be generated based on the pulse having the frequency included in the second frequency band and driving voltages V_{DD} and provided to the third resonator 1610. In this case, the transistors 123a and 123b may operate as inverters, and a third resonator 1610 may include at least one capacitor 1611 and 1613 and at least one coil 1612 and 1614. The number (e.g., two) of the at least one capacitor 1611 and 1613 and the number (e.g., two) of the at least one coil 1612 and 1614 are exemplary.

Although one end of the coil 1612 and one end of the coil 1614 are shown as grounded, this is exemplary. In another example, the coil 1612 and the coil 1614 may be implemented not to be connected to each other. Although the capacitors 1611 and 1613 are shown as connected in series to the coils 1612 and 1614, at least some capacitor may be implemented to be connected in parallel to a coil.

Referring again to FIG. 15, the controller 160 may select a resonator that satisfies a detection condition in operation 1505. In operation 1507, the controller 160 may control the power converter to apply power to the selected resonator. For example, when detecting that the second electronic device 520 is disposed in the second charging area corresponding to the coil 152, the controller 160 may select the coil 152. The controller 160 may control to apply power for charging the second electronic device 520 to the coil 152. In this case, the first switch 1603 may be connected to the node 1603a, and the second switch 1605 may be connected to the node 1603b.

For example, when detecting that a third electronic device 530 is disposed in a charging area (e.g., the first charging area) corresponding to the resonator 1610, the controller 160 may select the resonator 1610. For example, the controller 160 may detect a response signal corresponding to the ping signal, and thus detect that the third electronic device 530 supporting the Qi standard is disposed in the first charging area.

In an example, as in FIG. 1c, the first charging area covered by the scheme based on the AFA standard and the charging area covered by the scheme based on the Qi standard may overlap with each other. In this case, the controller 160 may identify a sensing result of the power sensor 130 even in the coil 142, while applying detection power. The controller 160 may determine that an impedance variation in the first resonator 140 is greater than the first threshold based on the sensing result. That is, the controller 160 may select the first resonator 140 and also select the resonator 1610. The controller 160 may finally select the resonator 1610 based on detection failure of an additional condition for the first resonator 140. For example, the controller 160 may be configured to receive an out-of-band communication signal (e.g., a BLE advertisement signal) after detecting an impedance variation in the first resonator 140 according to the AFA standard. Since the third electronic device 1630 supports the Qi standard, it may not transmit a communication signal. Accordingly, the controller 160 may fail to detect the additional condition according to the AFA standard, and select the resonator 1630 supporting the Qi standard.

The controller 160 may control to apply power for charging the third electronic device 1630 to the resonator 1610. In this case, the first switch 1603 may be connected to the node 1603b, and the second switch 1605 may be connected to the node 1603b.

For example, when detecting that the second electronic device 520 is disposed in a charging area (e.g., the second charging area) corresponding to the second resonator 520, the controller 160 may control to apply power for charging the second electronic device 520 to the second resonator 150. In this case, the first switch 1603 may be connected to the node 1603a, and the second switch 1605 may be connected to the node 1603a.

While not shown, according to another embodiment, the wireless power transmission device 100 may be implemented to include two gate driving circuits. One of the gate driving circuits may provide a pulse corresponding to the first wireless charging scheme, and the other gate driving circuit may provide a pulse corresponding to the first wireless charging scheme. Accordingly, the switches 1603 and 1605 illustrated in FIG. 16 may not be required. In this case, the wireless power transmission device 100 may simultaneously charge an electronic device supporting the Qi standard, disposed in the first charging area, and an electronic device supporting the AFA standard, disposed in the second charging area. Alternatively, the wireless power transmission device 100 may simultaneously charge an electronic device supporting the Qi standard, disposed in the first charging area, and an electronic device supporting the AFA standard, disposed in the first charging area.

An electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., a program 140) including one or more instructions that are stored in a storage medium (e.g., internal memory 136 or external memory 138) that is readable by a machine (e.g., an electronic device 101). For example, a processor (e.g., a processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wireless power transmission device comprising:
a power supply configured to supply direct current (DC) power;
a power converter configured to output a plurality of alternating current (AC) powers through a first output path and a second output path, respectively, using the DC power received from the power supply;
a first resonator and a second resonator connected to the first output path and the second output path, respectively;
a power sensor configured to measure a current and/or a voltage applied to each of the first resonator and the second resonator; and
a controller,
wherein the controller is configured to:
perform an operation of detecting an external electronic device for each of the first resonator and the second resonator, based on a measurement result from the power sensor,
select a resonator for charging the external electronic device, based on the detection operation for each of the first resonator and the second resonator, and
control the power converter to apply power for charging to the selected resonator, and
wherein a first diameter of a first coil in the first resonator is smaller than a second diameter of a second coil in the second resonator, and the first coil is disposed inside the second coil.

2. The wireless power transmission device of claim 1, wherein the controller is configured to, as at least part of performing the operation of detecting the external electronic device for each of the first resonator and the second resonator:
periodically apply detection power to the first resonator, and periodically apply the detection power to the second resonator,
identify a first impedance variation for the first resonator based on a result measured by the power sensor during the application of the detection power to the first resonator, and identify whether the first impedance variation is greater than a first threshold, and
identify a second impedance variation for the second resonator based on a result measured by the power sensor during the application of the detection power to the second resonator, and identify whether the second impedance variation is greater than a second threshold.

3. The wireless power transmission device of claim 2, wherein the controller is configured to, as at least part of selecting the resonator for charging the external electronic device based on the detection operation for each of the first resonator and the second resonator:
when determining that the first impedance variation is greater than the first threshold, select the first resonator, and
when determining that the second impedance variation is greater than the second threshold, select the second resonator.

4. The wireless power transmission device of claim 2, wherein the controller is configured to, as at least part of selecting the resonator for charging the external electronic device based on the detection operation for each of the first resonator and the second resonator:
when determining that the first impedance variation is greater than the first threshold, and the second impedance variation is greater than the second threshold,
select both the first resonator and the second resonator, or
select a resonator based on a result of comparison between the first impedance variation and the second impedance variation.

5. The wireless power transmission device of claim 3, wherein the controller is configured to, as at least part of selecting the resonator for charging the external electronic device based on the detection operation for each of the first resonator and the second resonator:
when determining that the first impedance variation is greater than the first threshold, and when identifying that at least one additional condition is further satisfied, select the first resonator, and
when determining that the second impedance variation is greater than the second threshold, and when identifying that the at least one additional condition is further satisfied, select the second resonator.

6. The wireless power transmission device of claim 2, wherein the controller is further configured to, when the first resonator is selected and the second resonator is not selected, as at least part of controlling the power converter to apply the power for charging to the selected resonator:
control to apply power for charging the external electronic device to the first resonator, and
maintain the application of the detection power to the second resonator.

7. The wireless power transmission device of claim 6, wherein the controller is further configured to determine whether an additional external electronic device is disposed in a charging area corresponding to the first resonator, based on a result sensed by the power sensor during the application of the power for charging the external electronic device to the first resonator.

8. The wireless power transmission device of claim 6, wherein the controller is further configured to determine whether an additional external electronic device is disposed in a charging area corresponding to the second resonator, based on a result sensed by the power sensor during the application of the power for charging the external electronic device to the first resonator and the application of the detection power to the second resonator.

9. The wireless power transmission device of claim 8, wherein the controller is further configured to, when the additional external electronic device is detected in the charging area corresponding to the second resonator during the application of the power for charging the external electronic device to the first resonator and the application of the detection power to the second resonator, control to apply power for charging the additional external electronic device to the second resonator.

10. The wireless power transmission device of claim 1, wherein the power converter comprises:
a first amplifier configured to output a first AC power to the first resonator, using a first pulse received from a first channel path of the power supply and the DC power from the power supply, and
a second amplifier configured to output a second AC power to the second resonator, using a second pulse received from a second channel path of the power supply and the DC power from the power supply.

11. The wireless power transmission device of claim 1, wherein the first resonator and the second resonator are configured to support a first wireless charging scheme, and
wherein the wireless power transmission device further comprises a third resonator configured to support a second wireless charging scheme different from the first wireless charging scheme.

12. The wireless power transmission device of claim 11, further comprising at least one switch configured to connect the power converter to at least one of the first resonator or the second resonator, or to the third resonator.

13. A wireless power transmission device comprising:
a power supply configured to supply direct current (DC) power;
a power converter configured to output a plurality of alternating current (AC) powers through a first output path and a second output path, respectively, using the DC power received from the power supply;
a first resonator and a second resonator connected to the first output path and the second output path, respectively;
a power sensor configured to measure a current and/or a voltage applied to each of the first resonator and the second resonator;
at least one switch configured to selectively connect at least one of the first resonator or the second resonator to the power sensor; and
a controller,
wherein the controller is configured to:
perform an operation of detecting an external electronic device for each of the first resonator and the second resonator, based on a measurement result from the power sensor,
select a resonator for charging the external electronic device, based on the detection operation for each of the first resonator and the second resonator, and
control the at least one switch and the power converter to apply power for charging to the selected resonator, and
wherein a first diameter of a first coil in the first resonator is smaller than a second diameter of a second coil in the second resonator, and the first coil is disposed inside the second coil.

14. The wireless power transmission device of claim 13, wherein the first resonator comprises:
a first capacitor having one end connected to the power sensor, and
a first coil having one end connected to the other end of the first capacitor,
wherein the second resonator comprises:
a second capacitor having one end connected to the power sensor, and
a second coil having one end connected to the other end of the second capacitor, and
wherein the at least one switch comprises:
a first switch configured to selectively connect the power sensor to the one end of the first capacitor or the other end of the second coil,
a second switch configured to selectively connect the power sensor to the one end of the second capacitor or the other end of the first coil, and
a third switch configured to selectively connect the other end of the first coil and the other end of the second coil.

15. The wireless power transmission device of claim 14, wherein the controller is configured to, as at least part of controlling the at least one switch to apply the power for charging to the selected resonator,
when both the first resonator and the second resonator are selected, control the first switch to connect the power sensor to the one end of the first capacitor, control the second switch to connect the power sensor to the one end of the second capacitor, and control the third switch to connect the other end of the first coil to the other end of the second coil,
when the first resonator is selected, control the first switch to connect the power sensor to the one end of the first capacitor, control the second switch to connect the power sensor to the other end of the first coil, and control the third switch not to connect the other end of the first coil to the other end of the second coil, and
when the second resonator is selected, control the first switch to connect the power sensor to the other end of the second coil, control the second switch to connect the power sensor to the one end of the first capacitor, and control the third switch not to connect the other end of the first coil to the other end of the second coil.
